# EUROPÄISCHE PATENTSCHRIFT

(11) **EP 2 221 753 B1**
(45) Veröffentlichungstag und Bekanntmachung des Hinweises auf die Patenterteilung: **27.01.2016**
(21) Anmeldenummer: 10001628.6
(22) Anmeldetag: 17.02.2010
(51) Int. Cl.: G06K 19/077

(54) **Smartkarte mit Tastschalter**
Smart card with pushbutton switch
Carte intelligente dotée d'un contact

(30) Priorität: 19.02.2009 DE 102009009643
(43) Veröffentlichungstag der Anmeldung: 25.08.2010
(73) Patentinhaber: Giesecke & Devrient GmbH, 81677 München (DE)
(72) Erfinder: Graf, Hans, 6850 Dornbirn (AT); Schiller, Christoph, Dr., 81827 München (DE); Kluge, Stefan, 80997 München (DE)

(56) Entgegenhaltungen:
- EP-A1- 1 544 787
- EP-A2- 2 015 233
- DE-A1- 10 343 734
- DE-A1-102005 020 092

## Beschreibung

Die vorliegende Erfindung betrifft ein Verfahren zur Herstellung einer Smartkarte mit Tastschalter sowie eine nach diesem Verfahren hergestellte Smartkarte mit einem Tastschalter.

Es sind unterschiedliche Smartkarten, wie Chipkarten bekannt, die eine Reihe von Funktionalitäten aufweisen. Beispielsweise werden Smartkarten mit Displays, so genannte Displaykarten, eingesetzt, auf deren Display unterschiedliche Informationen der Smartkarte angezeigt werden können. Um das Display ein- oder ausschalten oder um andere Kommandos abschicken zu können, wird ein Knopf auf der Smartkarte benötigt, der vom Anwender betätigt werden kann. Der Knopf stellt beim Betätigen einen Kontakt zwischen Leiterbahnen auf einer Leiterplatine im Karteninnern her und ermöglicht so die Aktivierung der gewünschten Funktion. Aus der DE 10 2005 020092 A1 ist ein Verfahren zur Herstellung eines tragbaren Datenträgers mit einem solchen Schalter bekannt, wobei der Kartenkörper durch Heißlaminierung hergestellt wird und darin eine Kavität für den Schalter eingebracht wird.

Die im Karteninnern angeordnete Leiterplatine weist eine Ebene von Leiterbahnen auf, welche zum Laden von Daten, wie beispielsweise Personalisierungsdaten, auf die Smartkarte und zum Kontaktieren des Tastschalters dienen können. Indem zum Laden der Daten Leiterbahnen in demjenigen Bereich der Karte freigelegt werden, in welchem später der Tastschalter angeordnet werden soll, lässt sich der Fertigungsaufwand gering halten. Allerdings müssen dann auf diesem kleinen Flächenbereich sowohl die Kontakte zum Laden der Daten als auch Kontakte für den Schalter untergebracht werden. Deshalb muss das Layout der Leiterbahnen sehr fein und kompliziert gestaltet werden, was zu einer erhöhten Fehleranfälligkeit führen kann. Da dementsprechend auch die Kontakte für den Tastschalter sehr klein sind, ist die Kontaktierung des Tastschalters ebenfalls fehleranfällig. Größere Kontakte für den Tastschalter können erzielt werden, indem auf der Karte mehrere Bereiche der Leiterplatine freigelegt werden, wobei ein Bereich zum Kontaktieren des Tastschalters und weitere Bereiche zum Kontaktieren beispielsweise von Kontaktflächen dienen. Das Freilegen mehrerer Bereiche erhöht allerdings den Fertigungsaufwand.

DE 103 43 734 A1 offenbart einen Datenträger mit einem IC-Modul und einer Antenne zur drahtlosen Datenübertragung und zusätzlich einer aufladbaren Batterie und einem Ein-Taster, die in den Datenträger integriert sind und derart durch Betätigen des Ein-Tasters und der Nutzung der Batterieenergie zur Erhöhung der Sende- und/oder Empfangsleistung einen bewussten Datenübertragungsvorgang mit zumindest dem doppelten Abstand, typisch dem 5 bis 50-fachen Abstand, ermöglichen.

EP 1544 787 A1 offenbart ein tragbares Objekt, d.h. ein Datenträger, für eine kontaktlose Kommunikation mit einem Lesegerät, das in der Nähe des Objektes angeordnet ist, wobei das Objekt eine integrierte Schaltung, eine Antenne mit einem ersten und einem zweiten Anschluss und einen Objektkörper umfasst, wobei das Objekt ferner einen Schalter umfasst, welcher von einem Bediener betätigt werden kann, und in einer geschalteten Ein-Position des Schalters der erste und der zweite Anschluss der Antenne elektrisch verbunden sind und die kontaktlose Kommunikation mit dem Lesegerät aktiviert ist, wobei in einer geschalteten Aus-Position des Schalters der erste und der zweite Anschluss der Antenne elektrisch nicht miteinander verbunden sind und die elektrische Kommunikation mit dem Lesegerät deaktiviert ist.

EP 2 015 233 A2, die den Oberbegriff der unabhängigen Ansprüche bildet, offenbart eine Chipkarte und deren Herstellung. Der Kartenkörper der Chipkarte weist eine erste Kavität auf, die das elektrische Modul der Chipkarte aufnimmt, und eine zweite Kavität, die einen Tastschalter bildet. Beide Kavitäten sind nebeneinander im Kartenkörper angeordnet.

Aufgabe der vorliegenden Erfindung ist es, ein Verfahren zur Herstellung einer Smartkarte mit einem Tastschalter weiter zu optimieren.

Die Aufgabe wird durch eine Smartkarte und ein Verfahren zur Herstellung einer Smartkarte gemäß den unabhängigen Ansprüchen gelöst. Vorteilhafte Ausgestaltungen und Weiterbildungen sind in davon abhängigen Ansprüchen angegeben.

Zum Herstellen einer Smartkarte mit einem manuell betätigbaren Tastschalter wird zunächst ein Smartkartenkörper mit einer Leiterplatine im Karteninnern bereitgestellt, wobei die Leiterplatine auf einer ersten Seite und einer der ersten Seite gegenüberliegenden zweiten Seite der Leiterplatine Leiterbahnen aufweist. In einem ersten Bearbeitungsschritt werden die auf der ersten Seite der Leiterplatine angeordneten Leiterbahnen in einem Bereich der Leiterplatine, beispielsweise durch Fräsen, freigelegt. Das Freilegen der Leiterbahnen der in der Smartkarte befindlichen flexiblen Platine (FPC) kann beim Fräsen einer Kavität in den laminierten Kartenkörper erfolgen, in welche der Tastschalter eingebracht wird. Im Falle eines spritzgegossenen Kartenkörpers können die Leiterbahnen alternativ freigelegt werden, indem durch geeignete Ausbildung der Spritzgießform der entsprechende Bereich von vornherein von Spritzgussmaterial freigehalten wird. Diese freigelegten Leiterbahnen werden zum Laden von Daten auf die Smartkarte, insbesondere zum elektronischen Personalisieren der Smartkarte, verwendet.

Erst nach der Personalisierung werden nun in demselben Bereich Kontakte der gegenüberliegenden Leiterbahnen freigelegt, die sich also auf der zweiten Seite der Leiterplatine befinden. Dies erfolgt wiederum von der gleichen Seite der Smartkarte aus, das heißt von der ersten Seite der Leiterplatine aus. Das Freilegen der gegenüberliegenden Leiterbahnen erfolgt somit durch die Leiterplatine hindurch, beispielsweise wieder durch Fräsen. Abschließend wird ein Tastschalter, beispielsweise eine metallische Schnappscheibe, mit den freigelegten Leiterbahnen auf der zweiten Seite der Leiterplatine kontaktiert. Der Tastschalter wird vorteilhaft auf der Leiterplatine im Karteninnern befestigt, beispielsweise geklebt oder gelötet. Als Kleber kann ein leitfähiger Kleber dienen. Der Anwender kann durch Betätigen des Schalters einen Schaltkreis auf der Leiterplatine schließen und eine bestimmte Funktion aktivieren.

Dieses Vorgehen bringt einige Vorteile mit sich. Auf den kleinflächigen Bereich, der für den Tastschalter vorgesehen ist, müssen nicht gleichzeitig Leiterbahnen für die Personalisierung und für den Tastschalter geführt werden. Es ist somit möglich, das Layout grober zu gestalten, wodurch es weniger anfällig für etwaige Fehler ist. Weiter können nun auf den rückseitigen Leiterbahnen die beiden Kontakte für den Tastschalter sehr groß gestaltet werden. Dies ist vorteilhaft, da diese typischerweise mit leitfähigem Kleber aufgeklebt werden, wobei der Klebekontakt je sicherer ist, desto größer die Klebefläche ist.

Vorteilhaft kann der Schalter tiefer in den Kartenkörper eingebracht werden, wenn die gegenüberliegenden Leiterbahnen in dem betreffenden Bereich der Leiterplatine nicht nur lokal zur Hindurchführung von Kontaktanschlüssen freigelegt werden, sondern wenn der betreffende Bereich der Leiterplatine großräumig entfernt wird, so dass eine Aussparung entsteht, in die der Tastschalter eingesetzt wird. Dies erhöht den Gestaltungsspielraum für den Tastschalter. So kann zum Beispiel durch den vergrößerten Schalthub eine bessere Taktilität des Schalters erreicht werden. Dadurch wird das Verfahren zur Herstellung einer Smartkarte mit Tastschalter weiter optimiert.

Bei dem Herstellungsverfahren der Smartkarte werden die auf der ersten Seite der Leiterplatine angeordneten Leiterbahnen nach dem Laden der Daten, wie Personaliserungsdaten und eventueller Software, vorzugsweise zerstört. Vorteilhaft erfolgt dies gerade durch das Freilegen der auf der zweiten Seite der Leiterplatine angeordneten Leiterbahnen, d.h. beim Durchfräsen der Leiterplatine bis auf die Leiterbahnen auf der zweiten Seite werden die Leiterbahnen auf der ersten Seite, welche zur Personalisierung gedient haben, zumindest teilweise weggefräst. Je nach dem Umfang ihrer Zerstörung ragen die Leiterbahnen der ersten Seite noch in einen Bereich hinein, in dem anschließend der Tastschalter angeordnet wird (wie auch in dem Falle, dass sie überhaupt nicht zerstört werden), oder sie grenzen im Falle ihrer vollständigen Entfernung zumindest noch an diesen Bereich, das heißt an die Aussparung für den Tastschalter, an.

Da in der Karte zwei unabhängige Verdrahtungsebenen vorhanden sind, kann bei der Herstellung der Karte die obere Ebene benutzt werden, um Software in die Karte zu laden und die Personalisierung durchzuführen. Nach der Herstellung der Karte werden diese Kontakte nicht mehr benötigt. Durch deren Zerstörung wird ein Sicherheitsmerkmal geschaffen, da auf die Schaltung selbst bei Entfernung des Tastschalters kein Zugriff mehr über diese Kontakte möglich ist und somit eine böswillige Manipulation der Personalisierungsdaten verhindert wird. Der Tastschalter wird dann nach dem Durchfräsen der Leiterplatine an der im Wesentlichen unversehrten unteren Verdrahtungsebene angeschlossen.

In einer vorteilhaften Ausführung des Verfahrens wird der Tastschalter zusammen mit der Abdeckung (z.B. Kontaktflächen oder biegsames Kunststoff- oder Metallplättchen) in einem Schritt als Modul in den Smartkartenkörper eingesetzt. Dazu kann das Modul z.B. ein Gehäuse umfassen, in welchem der eigentliche Tastschalter aufgenommen ist. Das Modul kann zum Beispiel mittels der MID-Technologie (Molded Interconnect Device) hergestellt werden.

Bei Molded Interconnect Devices (3D-MIDs) handelt es sich um spritzgegossene Schaltungsträger, mit denen es möglich wird, elektronische und mechanische Komponenten auf nahezu jeder beliebig geformten Leiterplatte zu integrieren. Die Fertigung von MIDs kann in herkömmlichem 2-Komponenten-Spritzguss erfolgen oder auch mit der neuartigen, extrem leistungsfähigen Laserdirektstrukturierung (LDS). Die Laserdirektstrukturierung ist ein Verfahren, das auf einer speziell für diesen Prozess entwickelten Laseranlage basiert und funktionalisierte 3D-MID-Kunststoffe nutzt. Mit dieser Technologie wird es im Gegensatz zur konventionellen Laserstrukturierung möglich, MIDs mit nur drei Fertigungsschritten (Spritzgießen, Laserstrukturierung, Metallisierung) zu produzieren. Natürlich können auch andere Methoden zur Herstellung von MIDs verwendet werden. Ebenso kann das Gehäuse durch herkömmlichen Metall-Insert-Spritzguss hergestellt werden, wobei metallene Kontaktfahnen mit Kunststoff umspritzt werden, oder durch eine andere geeignete Herstellungsart. Das Modul besteht dann aus einem Gehäuseunterteil, einem Gehäuserahmen und einem Gehäuseoberteil (Abdeckung). In dem entstehenden Hohlraum kann dann zum Beispiel die metallene Schnappscheibe untergebracht werden.

Der Gehäuserahmen kann entweder mit dem Gehäusedeckel in einem Stück oder separat gefertigt werden. Bevorzugt umfasst das Gehäuse einen Gehäuserahmen und einen Gehäuseboden, welche einstückig gebildet sind. Darin wird dann zum Beispiel eine metallene Schnappscheibe eingelegt. Diese Komponente wird als Modul auf einem Trägerband befestigt und mit gängiger Chipkartentechnologie wie ein normales Chipmodul in den Smartkartenkörper implantiert.

Die Befestigung des Moduls in der Karte erfolgt dabei typischerweise mit Hotmelt am Kragen des Trägerbands. Zusätzlich kann der Gehäuseboden zum Beispiel mittels ACF (anisotropic conducting film) oder ähnlichem an der Smartkarte befestigt werden, was zu einem verbesserten Kontaktverhalten führt. Die beschriebene Methode, ein komplettes Schaltermodul einzubauen (bevorzugt kombiniert mit der oben beschriebenen Methode, bis auf die Unterseite einer flexiblen Platine zu fräsen) hat den Vorteil, dass an der Stelle der höchsten mechanischen Belastung (die Unterseite des Tastschalters, also meist die "Füße" der Schnappscheibe) ein härteres, zäheres bzw. belastbareres Material eingesetzt werden kann als es der üblicherweise aus PVC bestehende Kartenkörper bereitstellen kann. Durch das Entfernen der Leiterplatine im Bereich des Tastschalters wird zusätzlicher Platz für diesen "doppelten Boden" geschaffen.

Weiter kann das Modul Strukturen an seinen Seiten aufweisen, mit denen es beim Einsetzen des Moduls in den Smartkartenkörper mechanisch verankert wird, d.h. die Strukturen bewirken, dass sich das Modul im Kartenkörper verhakt bzw. festkrallt. Dies kann mit widerhakenförmigen, keilförmigen oder sonstigen Strukturen geschehen, welche sich an den Seitenflächen befinden. Das Prinzip ist vergleichbar mit Dübeln. Besonders guter Halt kann mit einer Strukturierung aus Metallblech erreicht werden, welche sich besonders fest und untrennbar in das demgegenüber weichere Kunststoffmaterial, typischerweise PVC, des Kartenkörpers bohren kann. Dies kann einen wesentlichen Beitrag zur Haltekraft, welche der Haltekleber aufnehmen muss, leisten. Es ist so möglich, nur einen leitfähigen Kleber auf den Kontakten zu verwenden oder gänzlich auf Kleber zu verzichten, da das Schaltermodul nicht mehr aus der Karte fallen kann. Beim Druck mit dem Finger auf den Druckbereich wird der Tastschalter dann gegen die Kontaktflächen am Boden des Moduls gedrückt.

Der Tastschalter erstreckt sich zumindest teilweise unter einen Bereich, der gemäß ISO 7816-2 für Kontaktflächen vorgesehen ist, so dass der Schalter durch Drücken auf diesen Bereich betätigbar ist. Durch diese normgerechte Anordnung des Tastschalters ist es möglich, derzeitige Maschinen und Prozesse für die Herstellung einer solchen Smartkarte zu verwenden. Es werden keine speziellen Maschinen oder Prozesse benötigt, um einen Smartkartenkörper auf spezielle Weise zu bearbeiten. Vielmehr kann die üblicherweise für ein Chipmodul vorgesehen Kavität in ihrer Form und/oder Lage als Aufnahme für den Tastschalter dienen. Dies ist besonders bei reinen Kontaktloskarten vorteilhaft, die kein Chipmodul zur kontaktbehafteten Kommunikation benötigen. Dieser Aspekt wird als selbstständig erfinderisch angesehen, insbesondere also unabhängig davon, ob der Tastschalter auf der Leiterplatine befestigt ist, die auf einer ersten Seite erste Leiterbahnen zum Laden von Daten, insbesondere Personalisierungsdaten aufweist, wobei zweite Leiterbahnen auf einer der ersten Seite gegenüberliegenden zweiten Seite der Leiterplatine auf ihrer der Leiterplatine zugewandten Seite durch die Leiterplatine hindurch freigelegt und in dem freigelegten Bereich mit dem Tastschalter kontaktiert sind.

Vorteilhaft werden in dem Druckbereich die üblichen Kontaktflächen gemäß ISO 7816-2 vorgesehen, so dass auf herkömmliche Prozesse zurückgegriffen werden kann. Es ist auch möglich, ein ganzes Chipmodul mit Kontaktflächen vorzusehen. Dann ist die Smartkarte als gewöhnliche Chipkarte einsetzbar und über die Kontaktflächen mit bekannten Kartenlesegeräten kontaktierbar. Durch Drücken auf die Kontaktflächen wird der darunter liegende Tastschalter betätigt und eine bestimmte Funktion der Smartkarte aktiviert.

Bevorzugt ist unter diesen Kontaktflächen entgegen der ISO 7816-2 jedoch kein mit den Kontaktflächen elektrisch verbundener Chip vorhanden. Dadurch kann der Schalter einen größeren Platz in der Smartkarte einnehmen und einen größeren mechanischen Hub erlauben. Dies verbessert die taktilen Eigenschaften des Tastschalters, wodurch die Handhabung für den Anwender praktischer wird.

Alternativ kann der Druckbereich durch ein flexibles Kunststoff- oder Metallplättchen gebildet werden. Statt eines ISO-Kontaktmoduls aus glasfaserverstärktem Kunstharzlaminat mit Goldkontakten kann also beispielsweise auch ein Kunststoffplättchen als Druckbereich dienen. Dieses kann farbig, d.h. durchgefärbt, oder bedruckt sein, wobei als Aufdruck beispielsweise ein Logo oder ein Hinweis wie "press here" oder ähnliches vorgesehen sein kann.

Bevorzugt ist die Smartkarte eine Displaykarte. Der Tastschalter dient bei der Displaykarte zum Einschalten und/oder Ausschalten des Displays. Es ist somit möglich, dass der Anwender bestimmte Informationen über die Smartkarte auf dem Display der Displaykarte abrufen kann.

Die Smartkarte kann, wie erwähnt, auch eine Kontaktloskarte sein. Der Tastschalter kann in der Kontaktloskarte beispielsweise dazu dienen, einen auf einem Terminal durch die Kontaktloskarte ausgelösten Vorgang, wie zum Beispiel einen Bezahlvorgang, zu bestätigen. Dadurch ist es dem Anwender z.B. möglich, kontaktlose Vorgänge aktiv zu steuern, ohne dass eine Eingabe an dem jeweiligen Terminal vorgenommen werden muss. Weiter kann der Tastschalter auf einer Kontaktloskarte dazu dienen, die Antenne erst bei Knopfdruck zu schließen und erst dadurch eine kontaktlose Kommunikation zu ermöglichen, d.h. die Karte in einen sende- und empfangsfähigen Zustand zu bringen. Die vorgenannten Funktionen des Tastschalters im Zusammenhang mit Kontaktloskarten sind unabhängig von der konkreten Positionierung des Tastschalters vorteilhaft.

Es kann eine optische Einrichtung auf der Smartkarte vorgesehen sein, wie eine LED oder ein Display, die eine Betätigung des Tastschalters optisch anzeigt. Dadurch bekommt der Anwender statt oder zusätzlich zu einer haptischen Bestätigung eine optische Rückmeldung für einen erfolgreichen Tastendruck. Es können beispielsweise farbige LED zum Einsatz kommen oder ein auf einer Displaykarte vorhandenes Display benutzt werden, um eine Meldung auszugeben. Weiter kann auch eine akustische Einrichtung vorhanden sein, die eine Betätigung des Tastschalters akustisch signalisiert. Dies kann beispielsweise ein Piezo-Buzzer, eine Vorrichtung zur Erzeugung eines Knackgeräusches oder ein Lautsprecher sein. Bei erfolgreicher Betätigung des Tastschalters kann somit ein Geräusch wiedergegeben werden.

Der Tastschalter kann unterschiedlich ausgeführt sein. Er kann als - insbesondere metallische - Schnappscheibe, als kapazitiver Schalter oder als Piezoschalter ausgebildet sein. Eine Schnappscheibe, auch Schnappschalter, Sprungschalter oder "Knackfrosch" genannt, ist ein gebogenes Plättchen, das unter dem Druckbereich angeordnet ist. Bei Druck auf den Druckbereich wird die Schnappscheibe durchgebogen, wobei das typische Knackgeräusch erzeugt wird. Beim Loslassen bewegt sich die Schnappscheibe wieder in ihre ursprüngliche Form zurück. Durch dieses einfache mechanische Prinzip können Leiterbahnen auf der Leiterplatine elektrisch leitend verbunden werden. Statt eines mechanischen Schalters ist auch ein kapazitiver Schalter möglich, der ohne mechanischen Hub nur durch Berührung des Druckbereichs betätigbar ist. Ebenso ist ein Piezoschalter einsetzbar, der bei Druck einen Spannungsimpuls abgibt und so eine gewünschte Funktion der Smartkarte aktiviert.

Nachfolgend wird die Erfindung beispielhaft anhand der begleitenden Zeichnungen erläutert. Darin zeigen:
- Figur 1: eine Smartkarte mit Tastschalter und Display in Draufsicht, Figuren
- 2a - 2c: Schnittzeichnungen einer Smartkarte mit Tastschalter während verschiedener Phasen der Herstellung,
- Figur 3a: eine Schnittzeichnung eines Schaltermoduls in der Seitenansicht,
- Figur 3b: ein Schaltermodul in der Draufsicht von oben,
- Figur 3c: ein Schaltermodul von unten,
- Figur 4: eine Schnittzeichnung eines Schaltermoduls mit Widerhaken in der Seitenansicht,
- Figur 5: eine Schnittzeichnung eines Trägerbands mit mehreren Schaltermodulen und
- Figur 6: eine Schnittzeichnung einer Smartkarte mit implantiertem Schaltermodul.

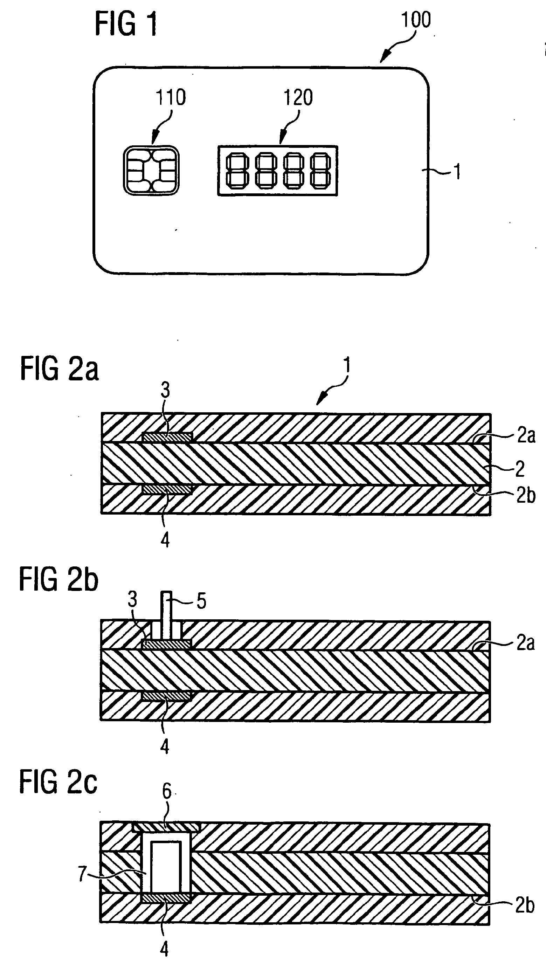

Figur 1 zeigt schematisch eine Smartkarte 100 in Draufsicht. Die Smartkarte besitzt einen Smartkartenkörper 1 und darin eingebettet ein Display 120 sowie ein Kontaktfeld 110, welches in diesem Ausführungsbeispiel an der Position gemäß ISO 7816-2 platziert ist. Unter dem Kontaktfeld 110 befindet sich ein hier nicht dargestellter Tastschalter, der durch Drücken auf das Kontaktfeld 110 betätigbar ist. Je nach Ausbildung des Tastschalters kann auch eine Berührung des Kontaktfeldes 110 ausreichend sein. Das Kontaktfeld 110 muss insbesondere nicht notwendigerweise die übliche Funktion eines solchen Kontaktfeldes übernehmen. Stattdessen kann es auch als einfache flexible Kunststoff- oder Metallabdeckung über einer Kavität, in der der Schalter angeordnet ist, ausgeführt sein. Unter dem Kontaktfeld 110 kann aber auch zusätzlich in üblicher Weise ein Chip sitzen, der über die Kontaktflächen des Kontaktfeldes 110 ansteuerbar ist.

Durch Betätigen des unter dem Kontaktfelds 110 befindlichen Tastschalters lässt sich das Display 120 aktivieren und/oder deaktivieren. Alternativ oder zusätzlich können andere Funktionen der Smartkarte 100 durch Betätigen des Tastschalters aufgerufen werden. Beispielsweise kann zwischen unterschiedlichen Funktionen durch mehrfaches Betätigen des Tastschalters gewechselt werden.

In Figur 2a ist ein unbearbeiteter Smartkartenkörper 1 im Schnitt dargestellt, in dessen Innern eine flexible Leiterplatine 2 angeordnet ist. Die Leiterplatine 2 weist auf ihrer Oberseite 2a und ihrer Unterseite 2b Leiterbahnen 3, 4 auf. In einem ersten Bearbeitungsschritt wird in den Smartkartenkörper 1 eine Kavität gefräst, die bis zu den Leiterbahnen 3 auf der Oberseite 2a der Leiterplatine 2 reicht. Wie in Figur 2b dargestellt, sind die Leiterbahnen 3 freigelegt und werden mit einer Nadel 5 kontaktiert. Über diese Verbindung werden Daten auf die Karte geladen, beispielsweise bestimmte Software und insbesondere Personalisierungsdaten. In einem weiteren Schritt wird die Leiterplatine 2 nach dem Laden der Personalisierungsdaten bis zu den Leiterbahnen 4 auf der Unterseite 2b der Leiterplatine 2 durchgefräst, um den einzubauenden Tastschalter mit den Leiterbahnen 4 elektrisch leitend verbinden zu können. Figur 2c zeigt, dass in dem dargestellten Ausführungsbeispiel die Leiterbahnen 3 dabei vollständig weggefräst wurden. Zumindest werden die Leiterbahnen 3 aber soweit zerstört, dass keine nachträgliche Manipulation der Personalisierungsdaten möglich ist. In dem dargestellten Ausführungsbeispiel wurde die Leiterplatine 2 so großflächig entfernt, dass in die entstandene Kavität nun ein Tastschalter 7, wie eine metallische Schnappscheibe, teilweise versenkt eingelegt werden kann und mit den Kontakten 4 der Leiterplatine 2 verbunden wird. Die Kavität wird mittels einer biegsamen Abdeckung 6 verschlossen. Diese kann entweder durch ISO-Kontaktflächen oder ein beliebiges Metall- oder Kunststoffplättchen gebildet werden. Durch Drücken auf die Abdeckung 6 wird der Tastschalter 7 betätigt und eine bestimmte Funktion der Smartkarte aktiviert.

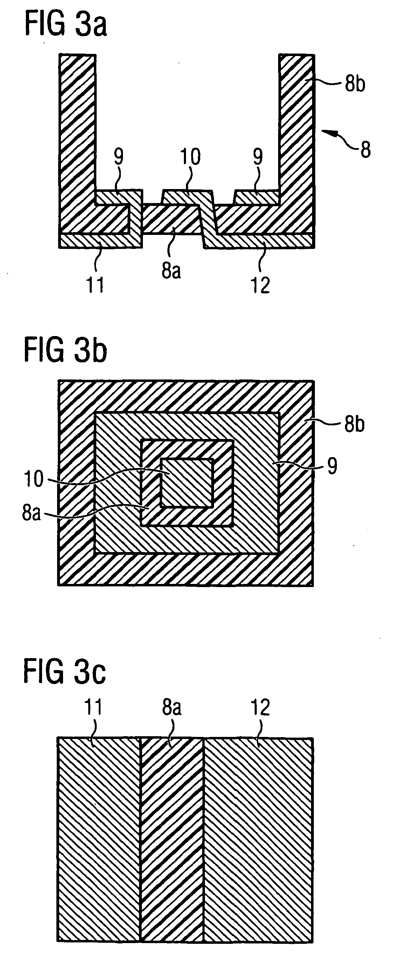

Anders als in dem in Figur 2c dargestellten Verfahren kann der Tastschalter 7 auch als vorgefertigtes Modul in den Smartkartenkörper 1 eingesetzt werden. In den Figuren 3a bis 3c ist ein solches Modul in verschiedenen Ansichten dargestellt. Figur 3a zeigt eine Seitenansicht, Figur 3b eine Ansicht von oben und Figur 3c eine Ansicht von unten. Zur besseren Darstellbarkeit ist das in Wirklichkeit sehr flache Modul in Figur 3a stark überhöht wiedergegeben. Das Modul besteht aus einem Gehäuse 8, welches auf der Unterseite seines Gehäusebodens 8a Kontakte 11,12 aufweist, die später eine Verbindung zu den Leiterbahnen 4 auf der Rückseite der Leiterplatine 2 herstellen. Die beiden Kontakte 11,12 stehen durch den Gehäuseboden 8a in Verbindung mit Kontakten 9,10. In diesem Ausführungsbeispiel ist der Kontakt 9 am Rand des Gehäuseinnern ausgebildet, während der Kontakt 10 in der Mitte angeordnet ist. Durch Drücken des Schalters, welcher beispielsweise als metallische Schnappscheibe ausgebildet ist, werden die Kontakte 9,10 miteinander verbunden, was eine Verbindung der Kontakte 11,12 und somit ein Schließen eines Schaltkreises auf der Leiterplatine 2 bewirkt.

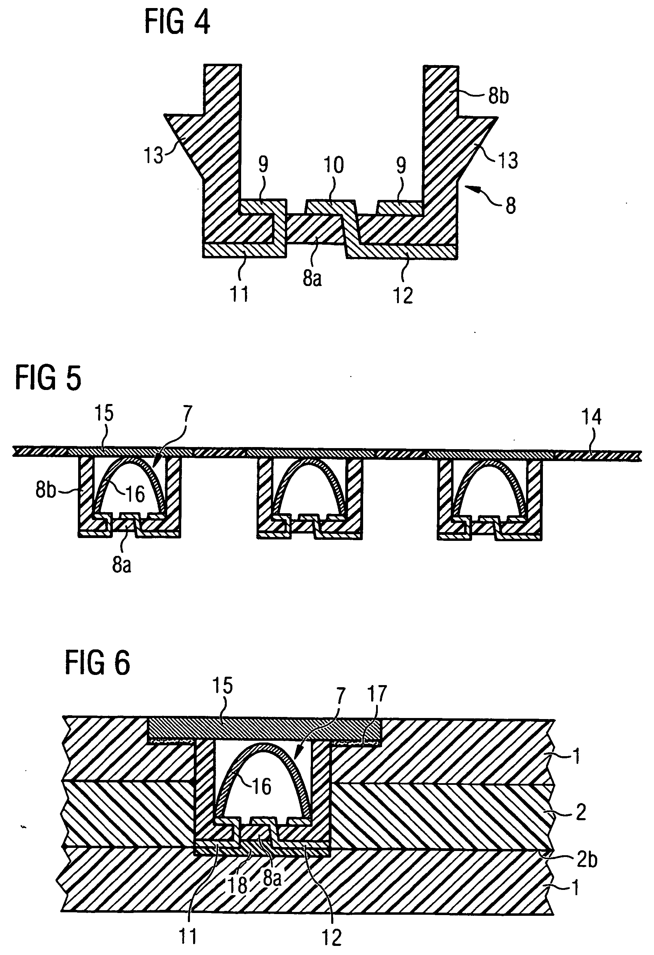

Figur 4 zeigt ein Ausführungsbeispiel eines Schaltermoduls, welches außen am Gehäuserahmen 8b keilförmige Strukturen 13 aufweist. Diese wirken als Widerhaken und stellen den Halt des Moduls in dem Smartkartenkörper sicher. Dadurch kann unter Umständen sogar ganz auf Kleber verzichtet werden.

Vor dem Implantieren der Module wird in den Hohlraum des Gehäuses 8 ein Tastschalter 7 in Form einer metallischen Schnappscheibe 16 eingesetzt. Der Gehäuserahmen 8b und der Gehäuseboden 8a der Module sind bevorzugt aus einem Stück gefertigt. Die Module werden nun auf einem Trägerband 14 befestigt, welches die Gehäuseabdeckung 15 bildet. Es kann sich dabei um ein herkömmliches metallisches Band, welches normalerweise für die Chipkartenimplantierung verwendet wird, mit oder ohne Kontaktlayout handeln. Dies ist in Figur 5 veranschaulicht. Wie bei der normalen Chipkartenproduktion werden die Tastermodule auf dem Trägerband 14 dem Herstellungsprozess zugeführt. Beispielsweise durch Stanzen wird dann jeweils ein Modul in eine Kavität eines Smartkartenkörpers implantiert. Die Kavität ist bevorzugt auf die oben beschriebene Weise hergestellt worden, d.h. die Kontakte zur Personalisierung wurden zerstört.

In Figur 6 ist ein Ausschnitt einer Smartkarte mit einem implantierten Schaltermodul im Schnitt dargestellt. Der aus dem Trägerband 14 ausgestanzte Bereich 15 schließt bündig mit der Kartenoberfläche ab. Mittels eines Heißklebers 17 (Hotmelt) wird das Modul in die Kavität eingeklebt. Der Gehäuseboden 8a bzw. die Kontakte 11, 12 werden mittels eines ACF (anisotropic conducting film) 18 auf den Kontakten 4 (nicht dargestellt) der Unterseite 2b der Leiterplatine 2 befestigt. Somit steht die Schnappscheibe 16 in leitfähigem Kontakt mit den Leiterbahnen der Leiterplatine 2 und erlaubt durch Drücken auf die flexible Abdeckung 15 die Aktivierung einer Funktion der Smartkarte.

## Patentansprüche

1. Verfahren zum Herstellen einer Smartkarte, die einen manuell betätigbaren Tastschalter (7,16) zur Aktivierung einer Funktion der Smartkarte umfasst, umfassend die folgenden Schritte:
- Freilegen eines Bereichs einer ersten Seite (2a) einer im Karteninnern angeordneten Leiterplatine (2), einschließlich dort angeordneter erster Leiterbahnen (3),
- Laden von Daten auf die Smartkarte von der ersten Seite (2a) der Leiterplatine (2) aus über die freigelegten ersten Leiterbahnen (3), insbesondere zum Personalisieren der Smartkarte,
- Freilegen von auf einer der ersten Seite (2a) gegenüberliegenden zweiten Seite (2b) der Leiterplatine (2) angeordneten zweiten Leiterbahnen (4) in dem genannten Bereich der Leiterplatine (2) von der ersten Seite (2a) der Leiterplatine (2) aus, und
- Kontaktieren eines Tastschalters (7,16) mit den freigelegten zweiten Leiterbahnen (4) auf der zweiten Seite (2b) der Leiterplatine (2), **dadurch gekennzeichnet, dass** der genannte Bereich in einem Bereich der Smartkarte liegt, der gemäß ISO 7816-2 für Kontaktflächen vorgesehen ist.

2. Verfahren nach Anspruch 1, **dadurch gekennzeichnet, dass** beim Schritt des Freilegens in dem genannten Bereich eine Aussparung in der Leiterplatine (2) gebildet und der Tastschalter (7,16) in die Aussparung eingesetzt wird.

3. Verfahren nach Anspruch 1 oder 2, **gekennzeichnet durch** den Schritt des Zerstörens der auf der ersten Seite (2a) der Leiterplatine (2) angeordneten ersten Leiterbahnen (3).

4. Verfahren nach Anspruch 3, **dadurch gekennzeichnet, dass** das Zerstören der auf der ersten Seite (2a) der Leiterplatine (2) angeordneten ersten Leiterbahnen (3) durch das Freilegen der auf der zweiten Seite (2b) der Leiterplatte (2) angeordneten zweiten Leiterbahnen (4) erfolgt.

5. Verfahren nach einem der Ansprüche 1 bis 4, **dadurch gekennzeichnet, dass** der Tastschalter (7,16) als Modul in die Smartkarte eingesetzt wird.

6. Verfahren nach Anspruch 5, **dadurch gekennzeichnet, dass** das Modul mittels Strukturen (13) an seinen Seiten in der Smartkarte mechanisch verankert wird.

7. Smartkarte, umfassend einen manuell betätigbaren Tastschalter (7,16) zur Aktivierung einer Funktion der Smartkarte, wobei der Tastschalter (7,16) auf einer Leiterplatine (2) im Karteninnern befestigt ist, die auf einer ersten Seite (2a) erste Leiterbahnen (3) zum Laden von Daten, insbesondere Personalisierungsdaten aufweist, wobei zweite Leiterbahnen (4) auf einer der ersten Seite (2a) gegenüberliegenden zweiten Seite (2b) der Leiterplatine (2) vorgesehen sind, wobei die zweiten Leiterbahnen (4) auf ihrer der Leiterplatine (2) zugewandten Seite (2b) durch die Leiterplatine (2) hindurch freigelegt und in dem freigelegten Bereich mit dem Tastschalter (7,16) kontaktiert sind, **dadurch gekennzeichnet, dass** sich der Tastschalter (7,16) zumindest teilweise unter einen Bereich erstreckt, der gemäß ISO 7816-2 für Kontaktflächen vorgesehen ist, und dass der Tastschalter (7,16) durch Drücken auf diesen Bereich betätigbar ist.

8. Smartkarte nach Anspruch 7, **dadurch gekennzeichnet, dass** der freigelegte Bereich eine Aussparung in der Leiterplatine (2) bildet, in welcher der Tastschalter (7,16) angeordnet ist.

9. Smartkarte nach Anspruch 7 oder 8, **dadurch gekennzeichnet, dass** die ersten Leiterbahnen (3) in dem Bereich, in dem der Tastschalter (7,16) angeordnet ist, zerstört sind.

10. Smartkarte nach einem der Ansprüche 7 bis 9, **dadurch gekennzeichnet, dass** der Tastschalter (7,16) als Modul in die Smartkarte eingesetzt ist.

11. Smartkarte nach einem der Ansprüche 7 bis 10, **dadurch gekennzeichnet, dass** der Bereich durch Kontaktflächen gemäß ISO 7816-2 oder ein flexibles Kunststoff- oder Metallplättchen (6,15) gebildet ist.

12. Smartkarte nach Anspruch 11, **dadurch gekennzeichnet, dass** in dem Bereich Kontaktflächen (6,15) gemäß ISO 7816-2 vorhanden sind und unter diesen Kontaktflächen (6,15) kein mit den Kontaktflächen (6,15) elektrisch verbundener Chip vorhanden ist.

13. Smartkarte nach einem der Ansprüche 8 bis 12, **dadurch gekennzeichnet, dass** die Smartkarte eine Kontaktloskarte und/oder eine Displaykarte ist und der Tastschalter (7,16) zum Einschalten und/oder Ausschalten eines Displays der Displaykarte dient.

## Claims

1. A method for manufacturing a smart card comprising a manually actuatable contact switch (7, 16) for activating a function of the smart card, comprising the following steps of:
- uncovering a region of a first side (2a) of a circuit board (2) arranged in the interior of the card, including first conductor paths (3) arranged there,
- loading data to the smart card from the first side (2a) of the circuit board (2) via the uncovered first conductor paths (3), in particular for personalizing the smart card,
- uncovering second conductor paths (4) in the specified region of the circuit board (2) from the first side (2a) of the circuit board (2), said second conductor paths being arranged on a second side (2b) of the circuit board (2) disposed opposite the first side (2a), and
- contacting a contact switch (7, 16) with the uncovered second conductor paths (4) on the second side (2b) of the circuit board (2), **characterized in that** the specified region is disposed in a region of the smart card which is provided for contact areas pursuant to ISO 7816-2.

2. The method according to claim 1, **characterized in that** in the step of uncovering, a gap is formed in the circuit board (2) in the specified region and the contact switch (7, 16) is inserted in the gap.

3. The method according to claim 1 or 2, **characterized by** the step of destroying the first conductor paths (3) arranged on the first side (2a) of the circuit board (2).

4. The method according to claim 3, **characterized in that** the destruction of the first conductor paths (3) arranged on the first side (2a) of the circuit board (2) is effected by uncovering the second conductor paths (4) arranged on the second side (2b) of the circuit board (2).

5. The method according to any of the claims 1 to 4, **characterized in that** the contact switch (7, 16) is inserted in the smart card as a module.

6. The method according to claim 5, **characterized in that** the module is mechanically anchored in the smart card by means of structures (13) on its sides.

7. A smart card, comprising a manually actuatable contact switch (7, 16) for activating a function of the smart card, wherein the contact switch (7, 16) is attached to a circuit board (2) in the interior of the card having first conductor paths (3) on a first side (2a) for loading data, in particular personalization data, wherein second conductor paths (4) are provided on a second side (2b) of the circuit board (2) disposed opposite the first side (2a), wherein the second conductor paths (4) are uncovered through the circuit board (2) on their side (2b) facing the circuit board (2) and are contacted with the contact switch (7, 16) in the uncovered region, **characterized in that** the contact switch (7, 16) extends at least partially below a region that is provided for contact areas pursuant to ISO 7816-2, and that the contact switch (7, 16) can be actuated by pressing on said region.

8. The smart card according to claim 7, **characterized in that** the uncovered region forms a gap in the circuit board (2) in which the contact switch (7, 16) is arranged.

9. The smart card according to claim 7 or 8, **characterized in that** the first conductor paths (3) are destroyed in the region in which the contact switch (7, 16) is arranged.

10. The smart card according to any of the claims 7 to 9, **characterized in that** the contact switch (7, 16) is inserted in the smart card as a module.

11. The smart card according to any of the claims 7 to 10, **characterized in that** the region is formed by contact areas pursuant to ISO 7816-2 or a flexible plastic or metal platelet (6, 15).

12. The smart card according to claim 11, **characterized in that** in the region contact areas (6, 15) pursuant to ISO 7816-2 are present and no chip is present below these contact areas (6, 15) that is electrically connected to the contact areas (6, 15).

13. The smart card according to any of the claims 8 to 12, **characterized in that** the smart card is a contactless card and/or a display card and the contact switch (7, 16) serves for switching on and/or off a display of the display card.

## Revendications

1. Procédé de fabrication d'une carte à puce qui comprend un commutateur à touche (7, 16) actionnable manuellement pour l'activation d'une fonction de la carte à puce, comprenant les étapes suivantes :
- dégagement d'une zone d'un premier côté (2a) d'une platine conductrice (2) agencée à l'intérieur de la carte, y compris de pistes conductrices (3) y étant agencées,
- chargement de données sur la carte à puce depuis le premier côté (2a) de la platine conductrice (2) par le biais des premières pistes conductrices (3) dégagées, en particulier pour la personnalisation de la carte à puce,
- dégagement de deuxièmes pistes conductrices (4) agencées en un deuxième côté (2b) de la platine conductrice (2) opposé au premier côté (2a) dans ladite zone de la platine conductrice (2) depuis le premier côté (2a) de la platine conductrice (2), et
- mise en contact d'un commutateur à touche (7, 16) avec les deuxièmes pistes conductrices (4) dégagées en le deuxième côté (2b) de la platine conductrice (2), **caractérisé en ce que** ladite zone se trouve dans une zone de la carte à puce qui est prévue conformément à ISO 7816-2 pour des surfaces de contact.

2. Procédé selon la revendication 1, **caractérisé en ce que**, lors de l'étape du dégagement dans ladite zone, un évidement est pratiqué dans la platine conductrice (2) et le commutateur à touche (7, 16) est inséré dans l'évidement.

3. Procédé selon la revendication 1 ou 2, **caractérisé par** l'étape de la destruction des premières pistes conductrices (3) agencées en le premier côté (2a) de la platine conductrice (2),

4. Procédé selon la revendication 3, **caractérisé en ce que** la destruction des premières pistes conductrices (3) agencées en le premier côté (2a) de la platine conductrice (2) a lieu par le dégagement des deuxièmes pistes conductrices (4) agencées en le deuxième côté (2b) de la platine conductrice (2).

5. Procédé selon une des revendications de 1 à 4, **caractérisé en ce que** le commutateur à touche (7, 16) est inséré dans la carte à puce sous forme de module.

6. Procédé selon la revendication 5, **caractérisé en ce que** le module est ancré mécaniquement dans la carte à puce au moyen de structures (13) en ses côtés.

7. Carte à puce, comprenant un commutateur à touche (7, 16) actionnable manuellement pour l'activation d'une fonction de la carte à puce, le commutateur à touche (7, 16) étant fixé à l'intérieur de la carte sur une platine conductrice (2) qui comporte, en un premier côté (2a), des premières pistes conductrices (3) destinées au chargement de données, en particulier de données de personnalisation, des deuxièmes pistes conductrices (4) étant prévues en un deuxième côté (2b) de la platine conductrice (2) opposé au premier côté (2a), les deuxièmes pistes conductrices (4) étant dégagées en leur côté (2b) tourné vers la platine conductrice (2) à travers la platine conductrice (2) et étant en contact avec le commutateur à touche (7, 16) dans la zone dégagée, **caractérisée en ce que** le commutateur à touche (7, 16) s'étend au moins partiellement sous une zone prévue conformément à ISO 7816-2 pour des surfaces de contact, et **en ce que** le commutateur à touche (7, 16) est actionnable par pression sur cette zone.

8. Carte à puce selon la revendication 7, **caractérisée en ce que** la zone dégagée constitue un évidement dans la platine conductrice (2) dans laquelle le commutateur à touche (7, 16) est agencé.

9. Carte à puce selon la revendication 7 ou 8, **caractérisée en ce que** les premières pistes conductrices (3) sont, dans la zone dans laquelle le commutateur à touche (7, 16) est agencé, détruites.

10. Carte à puce selon une des revendications de 7 à 9, **caractérisée en ce que** le commutateur à touche (7, 16) est inséré dans la carte à puce sous forme de module.

11. Carte à puce selon une des revendications de 7 à 10, **caractérisée en ce que** la zone est constituée par des surfaces de contact conformément à ISO 7816-2 ou par une plaquette flexible en matière plastique ou en métal (6, 15).

12. Carte à puce selon la revendication 11, **caractérisée en ce que**, dans la zone, il y a des surfaces de contact (6, 15) conformément à ISO 7816-2 et **en ce que**, sous ces surfaces de contact (6, 15), il n'y a pas de puce connectée électriquement aux surfaces de contact (6, 15).

13. Carte à puce selon une des revendications de 8 à 12, **caractérisée en ce que** la carte à puce est une carte sans contact et/ou une carte d'affichage et **en ce que** le commutateur à touche (7, 16) sert à allumer et/ou à éteindre un affichage de la carte d'affichage.
